# DEMANDE DE BREVET EUROPEEN

(11) **EP 3 892 357 A1**
(43) Date de publication de la demande: **13.10.2021**
(21) Numéro de dépôt: 21162390.5
(22) Date de dépôt: 12.03.2021
(51) Int. Cl.: B01D 53/22

(54) **INSTALLATION POUR LE TRAITEMENT PAR PERMÉATION MEMBRANAIRE DE BIOGAZ AVEC ADAPTATION DE LA SURFACE MEMBRANAIRE EN FONCTION DE LA PRESSION DE BIOGAZ**

(30) Priorité: 09.04.2020 FR 2003570
(71) Demandeur: L'AIR LIQUIDE SOCIÉTÉ ANONYME POUR L'ETUDE ET L'EXPLOITATION DES PROCEDES GEORGES CLAUDE, 75007 Paris (FR)
(72) Inventeur: VALENTIN, Solène, 38360 Sassenage (FR); BARRAUD, François, 38360 Sassenage (FR)
(74) Mandataire: Air Liquide

(57) **Abrégé**

Installation pour le traitement par perméation membranaire d'un flux gazeux d'alimentation comprenant au moins du méthane et du dioxyde de carbone, ladite installation comprenant :
- un moyen de mesure (M) de la pression P du flux gazeux d'alimentation,
- un moyen de comparaison de la pression P avec une valeur cible,
- au moins deux unités de séparation membranaire (4), (7) et
- un moyen (T) permettant d'ajouter et d'enlever au moins une membrane dans au moins une unité de séparation membranaire en fonction de la comparaison de la pression P avec la valeur cible.

## Description

La présente invention est relative à une installation de traitement par perméation membranaire d'un courant gazeux contenant au moins du méthane et du dioxyde de carbone pour produire un courant gazeux riche en méthane et à un procédé mettant en œuvre une telle installation.

Elle concerne en particulier l'épuration de biogaz, dans le but de produire du biométhane conforme aux spécifications pour injection dans un réseau de gaz naturel.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces. _

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL).

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment.

Créant des synergies entre les différents acteurs oeuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.

En particulier, plusieurs étapes sont nécessaires avant le traitement qui vise à séparer le dioxyde de carbone pour produire un courant de méthane purifié.

Une première étape consiste à comprimer le biogaz qui a été produit et acheminé à pression atmosphérique, cette compression peut être obtenue - de façon classique - via un compresseur à vis lubrifiée. Les étapes suivantes visent à débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Vient ensuite l'étape qui consiste à séparer le dioxyde de carbone pour disposer in fine de méthane à la pureté requise pour son usage ultérieur.

Le dioxyde de carbone est un contaminant typiquement présent dans le gaz naturel dont il est courant de devoir le débarrasser. Des technologies variées sont utilisées pour cela en fonction des situations ; parmi celles-ci, la technologie membranaire est particulièrement performante lorsque la teneur en CO2 est élevée ; elle est donc utilisée pour séparer le CO2 présent dans le biogaz, et en particulier dans le gaz de décharge.

Les procédés membranaires de séparation de gaz utilisés pour la purification d'un gaz, qu'ils utilisent un ou plusieurs étages de membranes doivent permettre la production d'un gaz à la qualité requise, pour un faible coût, tout en minimisant les pertes du gaz que l'on souhaite valoriser. Ainsi, dans le cas de l'épuration du biogaz, la séparation effectuée est principalement une séparation CH4/CO2, devant permettre la production d'un gaz contenant en fonction de son utilisation plus de 85% de CH4, de préférence plus de 95% de CO2, plus préférentiellement plus de 97,5% de CH4, tout en minimisant les pertes de CH4 dans le gaz résiduaire et le coût d'épuration, ce dernier étant pour une part importante lié à la consommation électrique du dispositif de compression du gaz en amont des membranes. _

Il est préférable que les installations permettant la production d'un flux gazeux enrichi en méthane puissent contrôler la perte de méthane. D'une part, dans le cas ou la surface membranaire en contact avec le biogaz est trop élevée, il y aura trop de perte de CH4 à l'atmosphère, d'autre part, si la surface membranaire en contact avec le biogaz est trop faible, la qualité du biométhane n'atteindra pas la cible voulue.

Partant de là, un problème qui se pose est de fournir une installation qui puisse adapter la surface membranaire en fonction du débit de biogaz.

Une solution de la présente invention est une installation pour le traitement par perméation membranaire d'un flux gazeux d'alimentation comprenant au moins du méthane et du dioxyde de carbone, ladite installation comprenant :
- un moyen de mesure M de la pression P du flux gazeux d'alimentation,
- un moyen de comparaison de la pression P avec une valeur cible ; cette valeur cible sera de préférence comprise entre 6 et 15 bar,
- au moins deux unités de séparation membranaire 4, 7 et
- un moyen T permettant d'ajouter et d'enlever au moins une membrane dans au moins une unité de séparation membranaire en fonction de la comparaison de la pression P avec la valeur cible.

Notons que l'installation selon l'invention pourra également comprendre un ou plusieurs moyens permettant d'ajouter et d'enlever au moins une membrane dans toutes les unités de séparation membranaire de l'installation.

Selon le cas, l'installation selon l'invention pourra comprendre une ou plusieurs des caractéristiques suivantes :
- le moyen permettant d'ajouter et d'enlever au moins une membrane comprend au moins une vanne.
- L'installation selon l'invention comprend au moins une première unité de séparation membranaire comprenant au moins une première membrane, et un moyen permettant d'ajouter et d'enlever au moins une seconde membrane de diamètre inférieur au diamètre de la première membrane. L'ajout ou le retrait de la seconde membrane permet de gérer d'avoir une faible variation de la pression, c'est-à-dire inférieure à 200 mbar en amont du 1er étage de séparation membranaire (première unité de séparation membranaire) et ainsi optimiser les performances de séparation de l'unité de séparation membranaire.
- La première membrane présente un diamètre compris entre 20 cm et 31 cm et la deuxième membrane présente un diamètre compris entre 5 cm et 16 cm. Notons que si l'unité de séparation membranaire comprend au moins trois membranes, la première membrane présentera un diamètre compris entre 20 cm et 31 cm et les autres membranes présenteront un diamètre compris entre 5 cm et 16cm. Autrement dit les membranes qui sont enlevées et ajoutées au sein d'une même unité de séparation membranaires sont des membranes de diamètre compris entre 5 cm et 16 cm.
- Le moyen permettant d'ajouter et d'enlever au moins une seconde membrane permet de mettre la seconde membrane en parallèle de la première membrane.
- Le moyen de mesure (M) de la pression P du flux gazeux d'alimentation est apte à détecter une variation de pression inférieure à 200 mbar, de préférence inférieure à 100 mbar,
- les membranes sont plus perméables au dioxyde de carbone qu'au méthane.
- La première unité de séparation membranaire est apte à recevoir le flux gazeux d'alimentation et à fournir un premier perméat et un premier rétentat et l'installation comprend une seconde unité de séparation membranaire apte à recevoir le premier rétentat et à fournir un second perméat et un second rétentat. De manière préférentielle, l'installation comprend également une troisième unité de séparation membranaire apte à recevoir le premier perméat et à produire un troisième rétentat et un troisième perméat. L'installation pourra éventuellement comprendre une quatrième unité de séparation membranaire apte à recevoir le troisième rétentat et à produire un quatrième rétentat et un quatrième perméat. Notons que les rétentats seront enrichis en méthane et les perméats enrichis en dioxyde de carbone.
- L'installation selon l'invention comprend en amont de la première unité de séparation membranaire un compresseur apte à compresser le flux gazeux d'alimentation en amont du moyen de mesure (M) de préférence à une pression comprise entre 6 bar et 15 bar.
- Les membranes présentent une sélectivité différente.
- L'installation selon l'invention comprend des moyens de transmission de données et de traitement de données entre le moyen de mesure (M) et le moyen permettant d'ajouter et d'enlever au moins une membrane.

La présente invention a également pour objet un procédé de traitement par perméation membranaire d'un flux gazeux d'alimentation comprenant au moins du méthane et du dioxyde de carbone pour produire un flux gazeux riche en méthane, mettant en œuvre une installation telle que définie précédemment et comprenant :
- Une étape a) de mesure de la pression P du flux gazeux d'alimentation à l'aide du moyen de mesure (M),
- Une étape b) de comparaison de la pression P avec une valeur cible,
- Une étape c) d'ajustement du nombre de membrane dans la première unité de séparation membranaire 4 en fonction de la comparaison effectuée à l'étape b) à l'aide du moyen permettant d'ajouter et d'enlever au moins une membrane,
- Une étape d) d'alimentation de la première unité de séparation membranaire avec le flux gazeux d'alimentation à la pression P de sorte à produire un premier rétentat 5 enrichi en méthane et un premier perméat 6 enrichi en dioxyde de carbone, et
- Une étape e) d'alimentation de la seconde unité de séparation membranaire 7 avec le premier rétentat de sorte à produire un second rétentat 8 enrichi en méthane et un second perméat 9 enrichi en dioxyde de carbone.

Selon le cas, le procédé selon l'invention peut présenter une ou plusieurs des caractéristiques ci-dessous :
- Le procédé selon l'invention comprend en amont de l'étape a) une étape de compression du flux gazeux d'alimentation.
- Le procédé selon l'invention comprend une étape f) d'alimentation d'une troisième unité de séparation membranaire 10 avec le premier perméat de sorte à produire un troisième rétentat 11 enrichi en méthane et un troisième perméat 12 enrichi en dioxyde de carbone.
- Le procédé selon l'invention comprend une étape g) d'alimentation d'une quatrième unité de séparation membranaire avec le troisième rétentat de sorte à produire un quatrième rétentat enrichi en méthane et un quatrième perméat enrichi en dioxyde de carbone.
- Le flux gazeux d'alimentation est du biogaz.

La présente invention va à présent être décrite plus en détail à l'aide des figures.

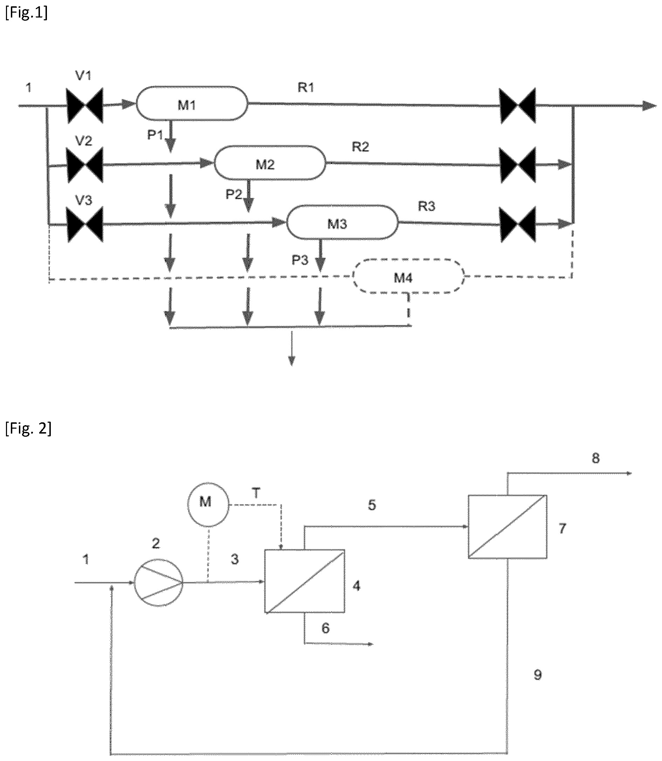

[Fig. 1] La figure 1 montre comment sont ajouter et enlever des membranes d'une unité de séparation membranaire. Le flux gazeux d'alimentation 1 entre dans l'unité de séparation membranaire, se divise et rencontre des vannes V1, V2, V3... qui donnent accès ou non chacune à une membrane M1, M2, M3... En effet, lorsqu'une vanne est ouverte le flux gazeux d'alimentation a accès à la membrane correspondante tandis que lorsque la même vanne est fermée le flux gazeux d'alimentation n'a plus accès à la membrane correspondante. Ainsi si on prend l'exemple de la figure 1, lorsque les vannes V1, V2 et V3 sont ouvertes, le flux gazeux d'alimentation subira une perméation membranaire simultanément (en parallèle) dans les membranes M1, M2, M3 et on récupèrera trois fractions de rétentat R1, R2, R3 et trois fractions de perméat P1, P2 et P3. Les trois fractions de rétentat R1, R2 et R3 seront rassemblées pour former le premier rétentat et les trois fractions de perméat P1, P2 et P3 seront rassemblées pour former le premier perméat. Selon un autre mode, lorsque les vannes V1 et V2 sont ouvertes et la vanne V3 est fermée, le flux gazeux d'alimentation subira une perméation membranaire simultanément (en parallèle) dans les membranes M1 et M2 mais pas dans la membrane M3, et on récupèrera deux fractions de rétentat R1 et R2 et deux fractions de perméat P1 et P2. Les deux fractions de rétentat R1 et R2 seront rassemblées pour former le premier rétentat et les deux fractions de perméat P1 et P2 seront rassemblées pourformer le premier perméat. Selon encore un autre mode, lorsque la vanne V1 est ouverte et les vannes V2 et V3 sont fermées, le flux gazeux d'alimentation subira une perméation membranaire uniquement dans la membrane M1, et on récupèrera une seule fraction de rétentat qui constituera le premier rétentat et une seule fraction de perméat qui constituera le premier perméat.

Dans la figure 1 les lignes en pointillé montrent qu'un nombre non défini de membranes peut être ajouté ou enlevé dans l'unité de séparation membranaire grâce au jeu de vannes.

Les vannes permettant d'ajouter et d'enlever les membranes d'une unité de séparation membranaire sont de préférence des vannes papillons ou des vannes à boule.

Notons que les débits passant dans les membranes d'une même unité de séparation membranaire sont identiques.

Dans le cas où l'installation selon l'invention comprendra trois unités de séparation membranaire, le deuxième perméat sera recyclé au compresseur situé en amont du moyen de mesure (M).

Dans le cas où l'installation selon l'invention comprendra quatre unités de séparation membranaire, le deuxième perméat et le quatrième rétentat seront recyclés au compresseur situé en amont du moyen de mesure (M).

Les troisième et quatrième perméats sont évacués hors du procédé, ils peuvent - indépendamment ou conjointement - être par exemple traités par oxydation thermique, utilisés pour valorisation du CO2, ou simplement rejetés à l'atmosphère.

Le flux gazeux d'alimentation à traiter peut être du biogaz pré-purifié, cette pré-purification pouvant selon les besoins comprendre tout ou partie des étapes suivantes : séchage, abattement du CO₂, élimination des composés organiques volatils (COV).

[Fig. 2] La Figure 2 représente une installation selon l'invention comprenant deux unités de séparation membranaire.

[Flg. 3] La Figure 3 représente une installation selon l'invention comprenant trois unités de séparation membranaire.

[Flg. 4] La Figure 4 représente une installation selon l'invention comprenant quatre unités de séparation membranaire.

Dans la Figure 2, le biogaz à purifier 1 est comprimé via le compresseur 2. Le moyen de mesure M mesure la pression du biogaz comprimé 3. La pression mesurée est comparée à une valeur cible et en fonction de cette comparaison un ordre d'ajouter ou d'enlever au moins une membrane est télétransmis T à la première unité de séparation membranaire 4. Le biogaz comprimé 3 alimente la première unité de séparation membranaire 4. Ce premier étage de membranes est constitué de membranes plus perméables au dioxyde de carbone qu'au méthane. En sortie de ce premier étage de membranes, on récupère un premier rétentat 5 à une pression proche de P1, et un premier perméat 6. Le premier rétentat 5 est envoyé à l'alimentation d'une deuxième unité de séparation membranaire 7 constitué de membranes plus perméables au dioxyde de carbone qu'au méthane. En sortie de ce deuxième étage de membranes, on récupère un deuxième rétentat 8 sous pression et riche en méthane et un second perméat 9 qui est renvoyé vers le compresseur 2 pour être recomprimé avant d'être recyclé à l'alimentation du premier étage de membranes. Le premier perméat 6 se présente sous la forme d'un courant gazeux qui est sorti du procédé pour être utilisé ou rejeté.

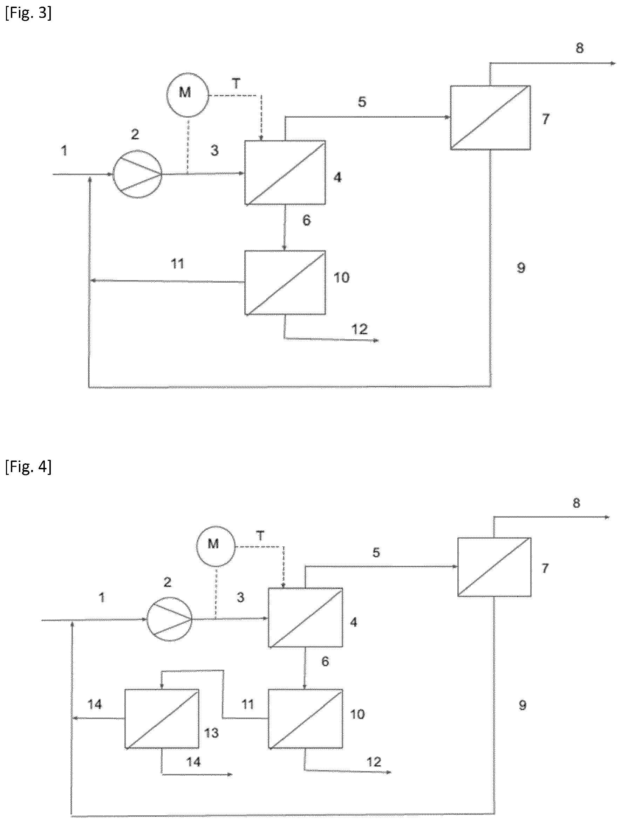

Dans la figure 3, le biogaz à purifier 1 est comprimé via le compresseur 2. Le moyen de mesure M mesure la pression du biogaz comprimé 3. La pression mesurée est comparée à une valeur cible et en fonction de cette comparaison un ordre d'ajouter ou d'enlever au moins une membrane est télétransmis T à la première unité de séparation membranaire 4. Le biogaz comprimé 3 alimente la première unité de séparation membranaire 4. Ce premier étage de membranes est constitué de membranes plus perméables au dioxyde de carbone qu'au méthane. En sortie de ce premier étage de membranes, on récupère un premier rétentat 5 à une pression proche de P1, et un premier perméat 6. Le premier rétentat 5 est envoyé à l'alimentation d'une deuxième unité de séparation membranaire 7 constitué de membranes plus perméables au dioxyde de carbone qu'au méthane. En sortie de ce deuxième étage de membranes, on récupère un deuxième rétentat 8 sous pression et riche en méthane et un second perméat 9 qui est renvoyé vers le compresseur 2 pour être recomprimé avant d'être recyclé à l'alimentation de la première unité de séparation membranaire. Le premier perméat 6 se présente sous la forme d'un courant gazeux, il alimente - sans compression intermédiaire - une troisième unité de séparation membranaire 10, constituée elle aussi de membranes plus perméables au dioxyde de carbone qu'au méthane. En sortie de ce troisième étage de membranes, on récupère un troisième rétentat 11 enrichi en méthane par rapport au premier perméat 6 et un troisième perméat 12. Le troisième perméat 12 est sorti du procédé pour être utilisé ou rejeté, le troisième rétentat 11 est renvoyé vers le compresseur conjointement avec le second perméat 9 pour être recomprimé avant d'alimenter la première unité de séparation membranaire. Le troisième perméat 12 se présente sous la forme d'un courant gazeux, il est évacué du procédé pour être utilisé ou rejeté.

Dans la figure 4, le biogaz à purifier 1 est comprimé via le compresseur 2. Le moyen de mesure M mesure la pression du biogaz comprimé 3. La pression mesurée est comparée à une valeur cible et en fonction de cette comparaison un ordre d'ajouter ou d'enlever au moins une membrane est télétransmis T à la première unité de séparation membranaire 4. Le biogaz comprimé 3 alimente la première unité de séparation membranaire 4. Ce premier étage de membranes est constitué de membranes plus perméables au dioxyde de carbone qu'au méthane. En sortie de ce premier étage de membranes, on récupère un premier rétentat 5 à une pression proche de P1, et un premier perméat 6. Le premier rétentat 5 est envoyé à l'alimentation d'une deuxième unité de séparation membranaire 7 constitué de membranes plus perméables au dioxyde de carbone qu'au méthane. En sortie de ce deuxième étage de membranes, on récupère un deuxième rétentat 8 sous pression et riche en méthane et un second perméat 9 qui est renvoyé vers le compresseur 2 pour être recomprimé avant d'être recyclé à l'alimentation de la première unité de séparation membranaire. Le premier perméat 6 se présente sous la forme d'un courant gazeux, il alimente - sans compression intermédiaire - une troisième unité de séparation membranaire 10, constituée elle aussi de membranes plus perméables au dioxyde de carbone qu'au méthane. En sortie de ce troisième étage de membranes, on récupère un troisième rétentat 11 enrichi en méthane par rapport au premier perméat 6 et un troisième perméat 12.Le troisième perméat 12 est évacué du procédé pour être utilisé ou rejeté, le troisième rétentat 11 alimente - sans compression intermédiaire - une quatrième unité de séparation membranaire 13, constituée elle aussi de membranes plus perméables au dioxyde de carbone qu'au méthane. En sortie de ce quatrième étage de membranes, on récupère un quatrième rétentat 14 enrichi en méthane par rapport au troisième rétentat 11 et un quatrième perméat 15. Le quatrième perméat 15 est évacué du procédé pour être utilisé ou rejeté, le quatrième rétentat 14 est renvoyé vers le compresseur 2 conjointement avec le second perméat 9 pour être recomprimé avant d'alimenter la première unité de séparation membranaire.

## Revendications

1. Installation pour le traitement par perméation membranaire d'un flux gazeux d'alimentation comprenant au moins du méthane et du dioxyde de carbone, ladite installation comprenant :
- un moyen de mesure (M) de la pression P du flux gazeux d'alimentation,
- un moyen de comparaison de la pression P avec une valeur cible,
- au moins deux unités de séparation membranaire (4), (7) dont au moins une première unité de séparation membranaire (4) comprenant au moins une première membrane, et
- un moyen (T) permettant d'ajouter et d'enlever au moins une seconde membrane de diamètre inférieur au diamètre de la première membrane en fonction de la comparaison de la pression P avec la valeur cible.

2. Installation selon la revendication 1, **caractérisée en ce que** le moyen permettant d'ajouter et d'enlever au moins une membrane comprend au moins une vanne.

3. Installation selon l'une des revendications 1 ou 2, **caractérisée en ce que** la première membrane présente un diamètre compris entre 20 cm et 31 cm et la deuxième membrane présente un diamètre compris entre 5 cm et 16 cm.

4. Installation selon l'une des revendications 1 à 3, **caractérisée en ce que** le moyen permettant d'ajouter et d'enlever au moins une seconde membrane permet de mettre la seconde membrane en parallèle de la première membrane.

5. Installation selon l'une des revendications 1 à 4, **caractérisée en ce que** les membranes sont plus perméables au dioxyde de carbone qu'au méthane.

6. Installation selon l'une des revendications 1 à 5, **caractérisée en ce que** la première unité de séparation membranaire est apte à recevoir le flux gazeux d'alimentation et à fournir un premier perméat et un premier rétentat et l'installation comprend une seconde unité de séparation membranaire apte à recevoir le premier rétentat et à fournir un second perméat et un second rétentat.

7. Installation selon l'une des revendications 1 à 6, **caractérisée en ce qu'**elle comprend en amont de la première unité de séparation membranaire un compresseur apte à compresser le flux gazeux d'alimentation en amont du moyen de mesure (M).

8. Installation selon l'une des revendications 1 à 7, **caractérisée en ce que** les membranes présentent une même sélectivité.

9. Installation selon l'une des revendications 1 à 9, **caractérisée en ce que** les membranes présentent une sélectivité différente.

10. Installation selon l'une des revendications 1 à 9, **caractérisée en ce qu'**elle comprend des moyens de transmission de données et de traitement de données (T) entre le moyen de mesure (M) et le moyen permettant d'ajouter et d'enlever au moins une membrane.

11. Procédé de traitement par perméation membranaire d'un flux gazeux d'alimentation comprenant au moins du méthane et du dioxyde de carbone pour produire un flux gazeux riche en méthane, mettant en œuvre une installation telle que définie dans l'une des revendications 1 à 10 et comprenant :
- Une étape a) de mesure de la pression P du flux gazeux d'alimentation à l'aide du moyen de mesure (M),
- Une étape b) de comparaison de la pression P avec une valeur cible,
- Une étape c) d'ajustement du nombre de membrane dans la première unité de séparation membranaire (4) en fonction de la comparaison effectuée à l'étape b) à l'aide du moyen (T) permettant d'ajouter et d'enlever au moins une membrane,
- Une étape d) d'alimentation de la première unité de séparation membranaire avec le flux gazeux d'alimentation à la pression P de sorte à produire un premier rétentat (5) enrichi en méthane et un premier perméat (6) enrichi en dioxyde de carbone, et
- Une étape e) d'alimentation de la seconde unité de séparation membranaire (7) avec le premier rétentat de sorte à produire un second rétentat (8) enrichi en méthane et un second perméat (9) enrichi en dioxyde de carbone.

12. Procédé selon la revendication 11, **caractérisé en ce qu'**il comprend en amont de l'étape a) une étape de compression du flux gazeux d'alimentation.

13. Procédé selon l'une des revendications 11 ou 12, **caractérisé en ce qu'**il comprend une étape f) d'alimentation d'une troisième unité de séparation membranaire (10) avec le premier perméat de sorte à produire un troisième rétentat enrichi en méthane (11) et un troisième perméat enrichi en dioxyde de carbone (12).

14. Procédé selon l'une des revendications 11 à 13, **caractérisé en ce que** le flux gazeux d'alimentation est du biogaz.
